# EUROPEAN PATENT SPECIFICATION

(11) **EP 0 432 696 B1**
(45) Date of publication and mention of the grant of the patent: **06.08.1997**
(21) Application number: 90123698.4
(22) Date of filing: 10.12.1990
(51) Int. Cl.: C08L 71/12, C08L 81/06, C08L 69/00, C08L 53/00

(54) **Polyindanes as processing aid for engineering thermoplastics**
Polyindane als Verfahrenshilfsmittel für Thermoplasten
Polyindanes comme agent facilitant le façonnage pour des résines thermoplastiques

(30) Priority: 11.12.1989 US 448394
(43) Date of publication of application: 19.06.1991
(73) Proprietor: HERCULES INCORPORATED, Wilmington Delaware 19894-0001 (US)
(72) Inventor: Chu, Sung G., Hockessin, Delaware 19707 (US); Patnaik, Birendra Kumar, West Chester, Pennsylvania 19382 (US); Shih, Keith Shann, Newark, Delaware 19711 (US)
(74) Representative: Lederer, Franz, Dr.

(56) References cited:
- EP-A- 0 343 648
- GB-A- 2 004 284
- US-A- 4 098 845
- US-A- 4 162 277
- US-A- 4 205 160

## Description

This invention relates to thermoplastic resin compositions comprising blends of a resinous modifier with a thermoplastic block copolymer, and a process for making them. Thermoplastic tri-block copolymers that have an elastomeric block in the center and a thermoplastic block on each end, present processing difficulties that have motivated efforts to modify their properties. For instance, block copolymers such as styrene-isoprene-styrene, styrene-butadiene-styrene and styrene-ethylene-butylene-styrene block copolymers, marketed by Shell Chemical Company under the trademark Kraton^{R}, when processed as adhesives, lose adhesion when heated to the temperature level needed for effective processing, for example, that required to achieve a melt viscosity that facilitates desirably thin coatings of the adhesive.

Typical disclosures of modifiers for thermoplastic block copolymers are found in U.S. Patents 4,732,936, 4,104,323 and 4,360,568, which disclose alpha-methylstyrene-p-methylstyrene copolymers, poly(2,6 dimethyl 1,4 phenylene) ether, or poly(2,6 dimethyl 1,4 phenylene) ether in combination with poly(alpha-methylstyrene) as such modifiers in pressure sensitive adhesive applications.

However, those modifiers may decrease the glass transition temperatures of the aromatic end blocks of the thermoplastic block copolymers and thereby reduce the cohesive strength of the adhesive at high temperatures, and the relatively high molecular weight of many of the modifying resins make them incompatible with the aromatic end blocks of thermoplastic block copolymers, reducing the tack properties of adhesives based on the modified blends and allowing a third dispersed phase to separate.

US-A-4,098,845 to Keck discloses the use of polyindanes to improve the rate of crystallization of polyethylene terephthalates and generally the indane content of the polymers used will be 90% or less.

Polymers containing units of indane, 1-pentene and 2-pentene structures are disclosed in US-A-4,205,160. These polymers are useful as lubricants and as molding aids for crystallizable polyester resins, especially polyethylene terephthalate.

Thus there is a need for thermoplastic resin compositions comprising blends of a resinous modifier with thermoplastic block copolymers as indicated above, to provide thermoplastic compositions with improved processability, desirably raising the blends' ring and ball softening temperature and the Tg of the aromatic block component of the thermoplastic block copolymer, without lowering the glass transition (T_{g}) temperatures of the midblocks of the copolymers or causing incompatiblity problems.

According to the invention, a thermoplastic resin composition comprising a blend of a resinous modifier with a thermoplastic block copolymer, is characterized in that it comprises 50-99 parts by weight of a thermoplastic block copolymer comprising an aromatic block component, and 1-50 parts by weight of a polyindane resin having a weight average molecular weight of less than 10,000, a melting point of at least 150°C, an unsaturation functionality not exceeding 3 mole % (based on diisopropenylbenzene), and an indane content of at least 90%.

The polyindane resin modifiers used in this invention can be blended with thermoplastic tri-block (ABA) copolymers that have an elastomeric block in the center and a thermoplastic block on each end, for instance, styrene-isoprene-styrene (SIS), styrene-butadiene-styrene (SBS), and styrene-ethylene-butylene-styrene block copolymers, marketed by Shell Chemical Company under the trademark Kraton^{R}, as well as block copolymers containing substituted vinyl aromatic and aliphatic blocks and alloys or blends of these polymers. The preferred block copolymers are those marketed under the trademark Kraton^{R}.

The preferred blends of the polyindane resin with the block copolymers according to the invention contain 1-50 wt. % of the substantially saturated polyindane resin. As demonstrated in Examples 9-11, the presence of the polyindane resin lowers the melt viscosity of the block copolymer, enhances the glass transition temperature of the end block without affecting that of the midblock and improves the tensile strength, modulus and hardness without lowering the elongation.

As indicated, the polyindane resins should be substantially saturated, and preferably the unsaturation functionality should not exceed 1 mole % (based on diisopropenylbenzene), and most preferably be zero. As indicated, the indane content of the resin should be at least 90%, preferably 95% and most preferably 100%. The weight average molecular weight of the resin should be less than 10,000 and the resin should have a melting point of 150°C. or higher, preferably higher than 200°C.

The preparation of polyindane resins with varied indane content, molecular weight, and glass transition temperatures is well known to those skilled in the art, for instance by cationic polymerization of diisopropenylbenzene, as described by H. Brunner, et al., J. Polymer Science - Polymer Letters edition, 1958, Volume 28, p. 629, or, as disclosed in U.S. Patent No. 4,205,160, by the polymerization of m- or p-diisopropenylbenzene diol or m- or p-diisopropenylbenzene.

The prior art teaches that such cationic polymerizations yield resins containing indane, 1-pentene and 2-pentene units as shown in I, II and III, seen below, respectively. The relative content of these polymers in a composition may be readily determined by ¹³C NMR analysis, in order to ensure that the proportion of the indane units I is at least 90%.

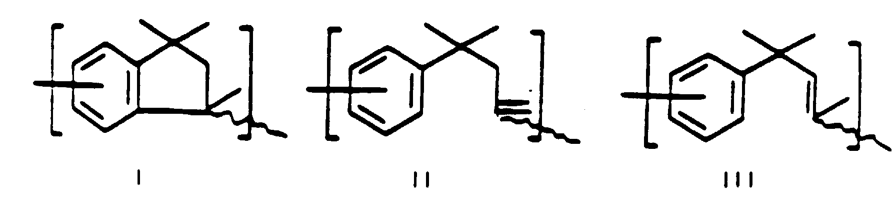

In the preparation of polyindane resins for use in the compositions according to the invention by the polymerization of m- or p-diisopropenylbenzene diol or m- or p-diisopropenylbenzene, the m-diisopropenylbenzene isomer is the preferred monomer. If the para isomer is present, the meta isomer content should be at least 95 wt. %, and preferably 98 wt. % or higher. The monomer's concentration in the polymerization medium can be varied in a wide range, although a 25 to 50 wt. % content is preferred for reasons of economy.

The aromatic solvent that can be used in this invention include all of the substituted aromatic compounds that are typically used as solvents. These include common solvents such as toluene, xylenes, and ethyl benzene. The halogenated aromatic solvents, such as chlorobenzene, and 1,2-dichlorobenzene, are preferred for their ability to increase the percentage of saturated indane units in the polymer. Halogenated aliphatic solvents can also be used.

The catalysts useful in preparing the polyindanes of the present invention include acidic clay catalyst such as those marketed by Harshaw Filtrol Corporation of Los Angeles, California. These clays are acid-activated crystalline clays composed essentially of silica and alumina. A particularly suitable grade is Filtrol 22. Other acid treated clays can also be used such as Filtrol 113 and Filtrol 13. The acidified clay catalyst should be present in a sufficient quantity to yield the desired polyindane. Based on the monomer content, the catalyst level should be 1 to 20 wt.%, and preferably from 5 to 10 wt. %. Other effective catalysts include Bronsted acids and Lewis acids such as boron trifluoride, aluminum trichloride, ethyl aluminum dichloride, titanium tetra chloride, etc..

The polymerization temperature should be above 80°C. and preferably at least 100°C. or higher up to a maximum of 180°C. Lower polymerization temperatures result in increased levels of unsaturation or yield crosslinked products. Typically, the polymerization is conducted by dropwise addition of the m-diisopropenylbenzene monomer to a mixture of the solvent and the catalyst maintained at the desired polymerization temperature. The length of the monomer addition period is not critical, but should be completed as soon as possible.

After monomer addition is completed, the monomer is present in a concentration greater than 25 wt. % of the mixture. The polymerization is typically carried out for 1 to 5 hours, and preferably for 1 to 2 hours, after the completion of the monomer addition. Shorter polymerization times have been found to yield polymers containing undesirable unsaturation functionalities, while longer polymerization times yield materials having broader molecular weight distributions.

According to the invention, a process for making a thermoplastic resin composition, comprising preparing a resinous modifier and blending it with a thermoplastic block copolymer, is characterized in that the resinous modifier is prepared by the steps of forming a mixture comprising diisopropenylbenzene, an aromatic solvent selected from the group consisting of toluene, xylene, ethyl benzene, halogenated aromatic solvents and halogenated aliphatic solvents and an acidic clay catalyst selected from the group consisting of Bronsted acids, Lewis bases and acid clay catalysts, wherein said diisopropenylbenzene comprises 25 to 50 wt.% of said mixture; maintaining said mixture at a temperature in the range from 80°C. to 180°C. for a period of 1 to 5 hours and then isolating from said mixture a polyindane polymer that has an indane content of 98-100%. and an unsaturation content of less than 3%.

The polyindane resin is miscible with block copolymers to varied degrees. The melt viscosity of the blends with block copolymers defined in accordance with the present invention is lowered (and the ring and ball softening temperature and the Tg of the aromatic block component of the thermoplastic block copolymer unchanged or raised), without lowering the critical glass transition (T_{g}) temperature of the end blocks of the copolymers.

The thermoplastic block copolymers include the conventional variety of diene rubbers, AB, and ABA block copolymer rubbers; for instance, the ABA block copolymers having end blocks A formed of vinyl aromatic hydrocarbon monomer such as styrene, methyl styrene or mixtures thereof and a center block B formed of a 1,3-diene such as butadiene or isoprene. The ABA block copolymers may also be hydrogenated to reduce the ethylenic unsaturation content. The ratio of A and B units and the molecular weights of the ABA block copolymers may be varied widely; the A blocks should preferably comprise 2-31 weight percent of the block copolymer. Such block copolymers are widely available commercially both in hydrogenated and unhydrogenated versions. Most preferred are the styrene-isoprene-styrene, styrene-butadiene-styrene, and styrene-ethylene-butadiene-styrene block copolymers marketed under the tradename Kraton. Other thermoplastic block copolymers include styrene-1,3-diene copolymers and graft copolymers, and polyolefin copolymers such as ethylenepropylene copolymers.

As indicated, the compositions of this invention can be varied in a range of 1 to 5C weight percent polyindane resin, depending on the miscibility of the resins and the physical properties desired. Compositions containing 1-20 weight percent are preferred.

The compositions of this invention can be prepared by either blending in solution or by melt blending. Thus, the resins can be blended in a common solvent such as chlorobenzene or chloroform and the resin blend collected after precipitation in excess methanol. The resin blend is then dried. More conveniently, the compositions are prepared by premixing the components and passing the blend through an extruder maintained at a temperature from 290-310°C. at 150 rpm. The compositions are characterized for melt viscosity, glass transition temperature (Tg) and heat distortion temperature. Compositions of the present invention can be molded or extruded into useful articles of manufacture by means known to those skilled in the art. Conventional additives, such as reinforcing and nonreinforcing fillers, pigments, stabilizers and lubricants, can be employed in the practice of the present invention.

### EXAMPLE 1

### Preparation of Polyindane Resin

Chlorobenzene (50 g) and Filtrol 22 acidified clay (5 g) were charged into a 3-neck flask and maintained under stirring at 100°C. m-Diisopropenylbenzene (50 g) was added dropwise while maintaining the temperature at 100°C. The polymerization was carried out for 1 hour at 100°C. after which the clay was filtered off and the polymer was precipitated in excess methanol. The polymer was filtered off and dried in a vacuum oven. The polymer had the following properties: melting point 215°C., Tg 173°C. and weight average molecular weight (SEC) 4370, indane content 100%. Other polyindane resins having different indane contents and exhibiting varied Tgs were prepared in a similar fashion by varying polymerization conditions, including polymerization temperature and the reaction medium.

### EXAMPLES 2-5

Table 1 summarizes the melt viscosity, Tg and HDT of impact polyphenylene ether compositions comprising a poly(2,6-dimethyl 1,4-phenylene) ether, an ABA type block copolymer and the polyindane resin of Example 1. Examples 2 and 3 are controls that do not contain the block copolymer.

This data shows that the inclusion of the polyindane substantially lowers the melt viscosity with only marginal lowering in Tg or HDT.

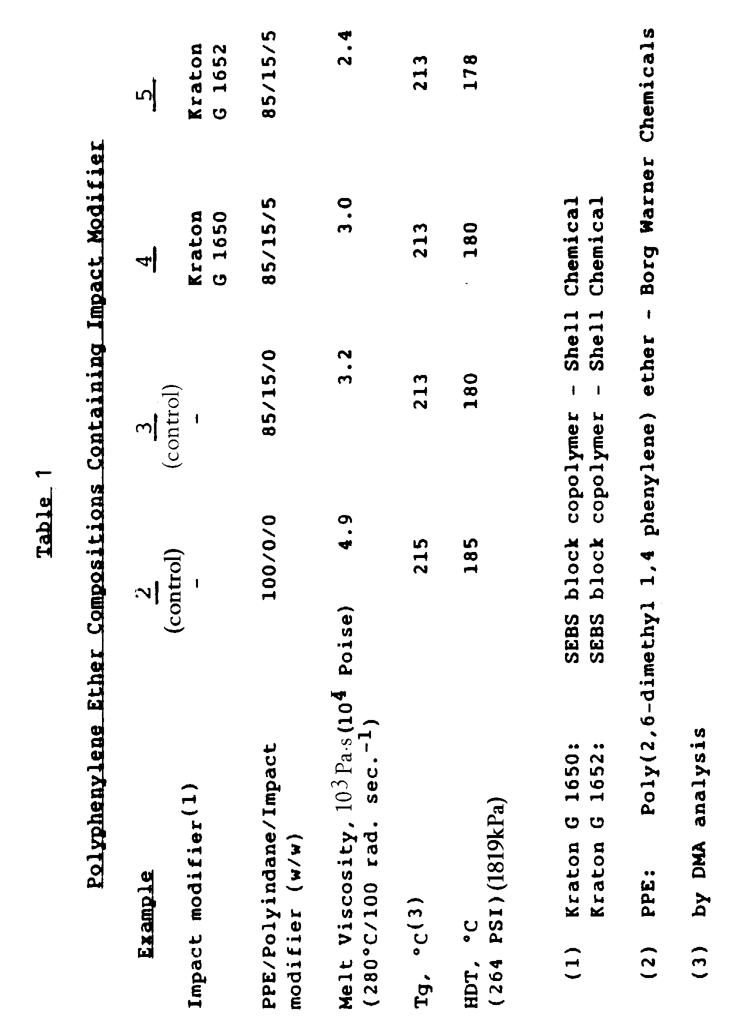

### EXAMPLES 6-8

In Table 2 is shown the physical properties of an impact polyphenylene ether composition comprising 85/15/5 parts by weight of poly(2,6-dimethyl-1,4-phenylene) ether, polyindane resin and Kraton G 1652 (Example 8). Examples 6 and 7 are for reference purposes only. The results show that the PPE composition of Example 8 has good impact strength with other physical properties being almost comparable to that of the control PPE. The composition's melt viscosity is half of the control and yet the HDT is only marginally lowered.

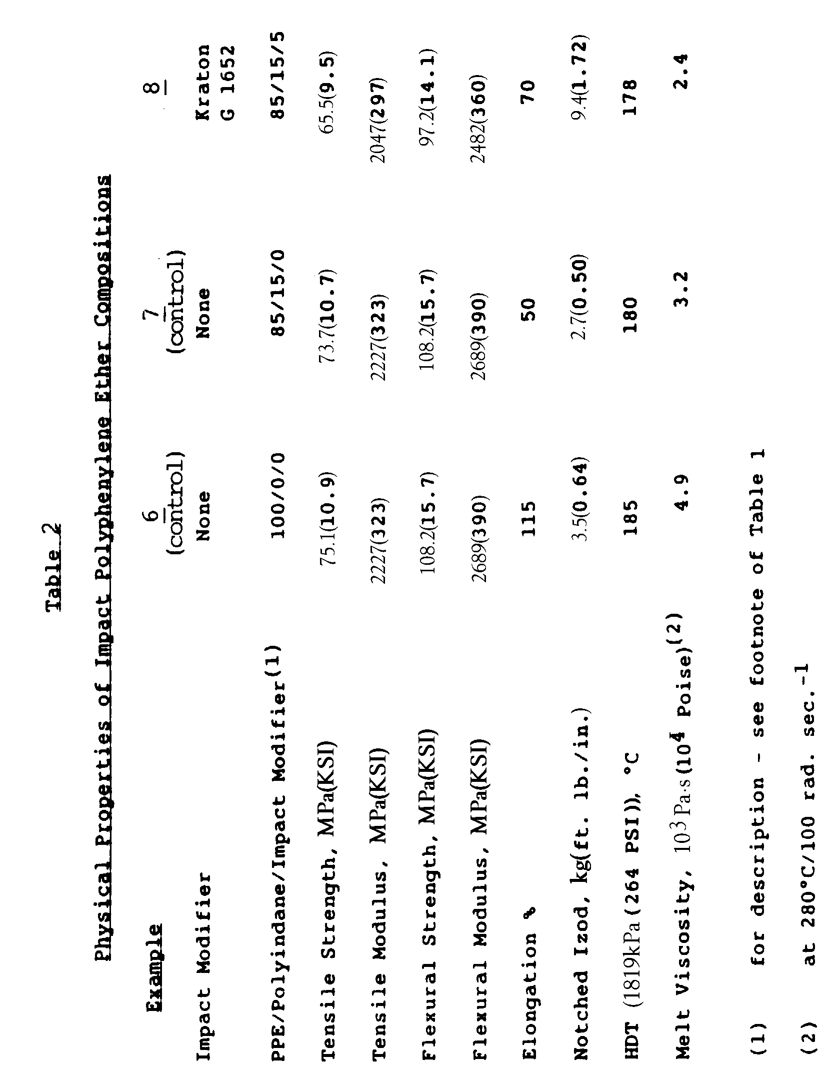

### EXAMPLES 9-11

Table 3 compares the properties of a styrene-ethylene-butadiene-styrene (SEBS) linear block copolymer which is unmodified by polyindane resin (Example 9) with 80/20 and 70/30 blends (Examples 10 and 11, respectively) of the block copolymer to polyindane. The SEBS block copolymer used was Kraton G 1650 sold by Shell Chemical Company, Oak Brook, Illinois. The presence of the polyindane resin results in enhanced glass transition temperature of the end block without affecting that of the midblock and improves tensile strength, modulus and hardness without lowering the elongation.

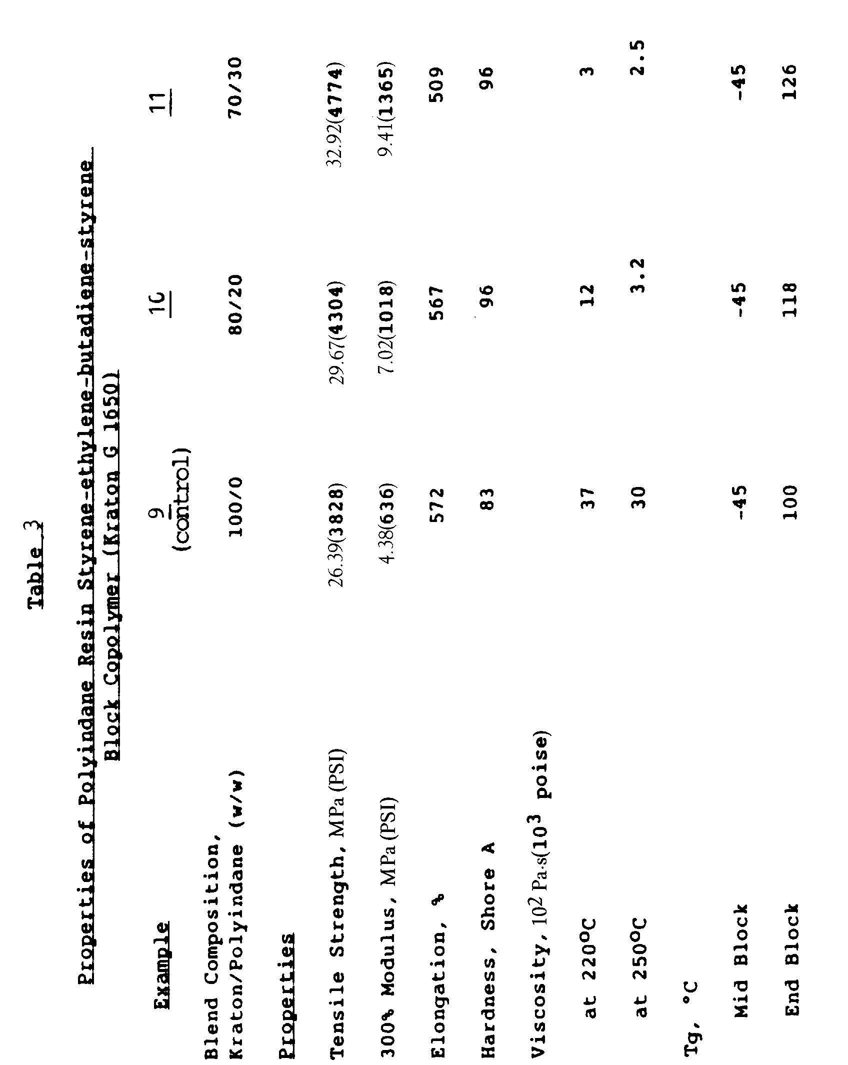

### EXAMPLES 12-23

Table 4 compares the properties of the modified SEBS block copolymer Kraton G 1650 with the properties of other block copolymers commercially available from Shell Chemical Company, Oak Brook, Illinois when modified according to the invention by the indicated proportions of polyindane resins.

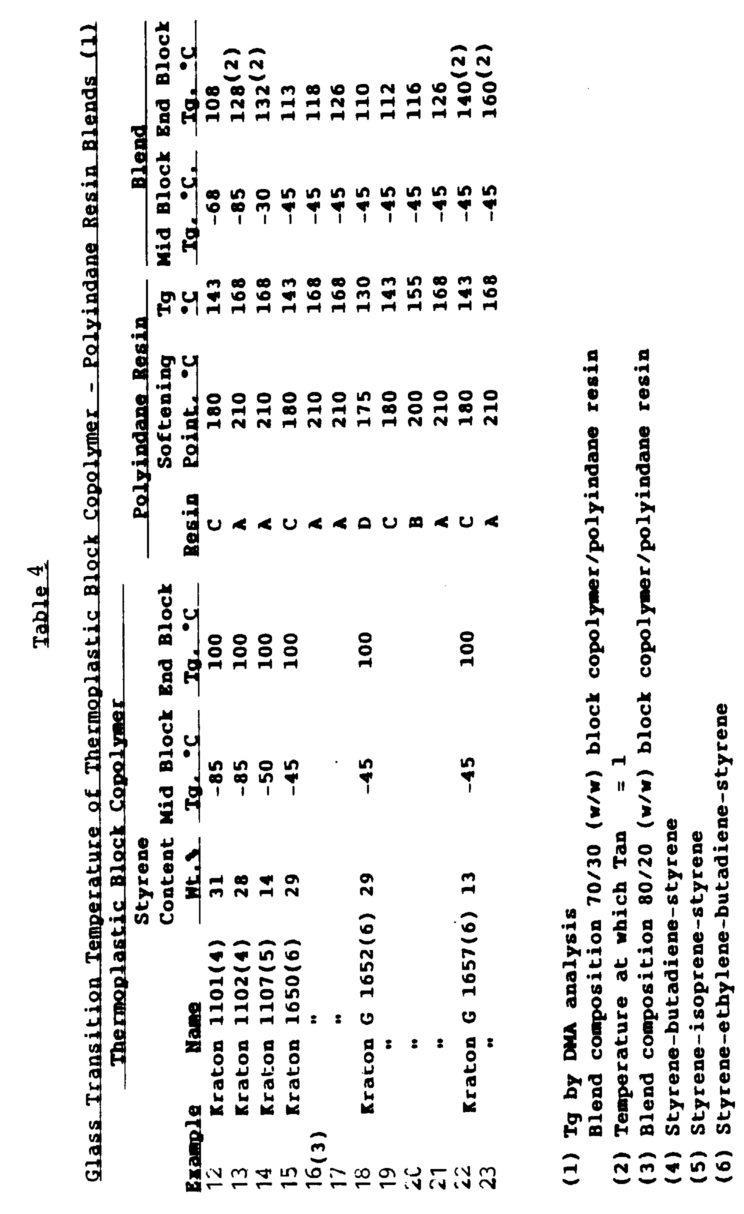

## Claims

1. A thermoplastic resin composition comprising a blend of a resinous modifier with a thermoplastic block copolymer, characterized in that it comprises 50-99 parts by weight of a thermoplastic block copolymer comprising an aromatic block component, and 1-50 parts by weight of a polyindane resin having a weight average molecular weight of less than 10,000, a melting point of at least 150°C, an unsaturation functionality not exceeding 3 mole % (based on diisopropenylbenzene), and an indane content of at least 90%.

2. A thermoplastic resin composition as claimed in claim 1, further characterized in that the unsaturation functionality of the polyindane resins does not exceed 1 mole % (based on diisopropenylbenzene).

3. A thermoplastic resin composition as claimed in claim 2, further characterized in that the indane content of the resin is at least 95%.

4. A thermoplastic resin composition as claimed in claim 3, further characterized in that the indane content of the resin is 100%.

5. A thermoplastic resin composition as claimed in any one of the preceding claims, further characterized in that the melting point of the indane resin is above 200°C.

6. A thermoplastic resin composition as claimed in any one of the preceding claims, further characterized in that it comprises 50 to 99 wt. % of a thermoplastic tri-block (ABA) copolymer that has an elastomeric block in the center and a thermoplastic block on each end.

7. A thermoplastic resin composition as claimed in claim 6, further characterized in that the ABA copolymer is a styrene-isoprene-styrene (SIS), a styrene-butadiene-styrene (SBS), or a styrene-ethylene-butylene-styrene block copolymer.

8. A process for making a thermoplastic resin composition comprising preparing a resinous modifier and blending it with a thermoplastic block copolymer comprising an aromatic block component, characterized in that the resinous modifier is prepared by the steps of forming a mixture comprising diisopropenylbenzene, an aromatic solvent selected from the group consisting of toluene, xylene, ethyl benzene, halogenated aromatic solvents and halogenated aliphatic solvents and an acidic clay catalyst selected from the group consisting of Bronsted acids, Lewis bases and acid clay catalysts, wherein said diisopropenylbenzene comprises 25 to 50 wt.% of said mixture; maintaining said mixture at a temperature in the range from 80°C to 180°C. for a period of about 1 to 5 hours and then isolating from said mixture a polyindane polymer that has an indane content of 98-100% and an unsaturation content of less than 3%.

9. A process for making a thermoplastic resin composition as claimed in claim 8, further characterized in that the polyindane polymer is blended with the thermoplastic block copolymer by blending the components in solution and then precipitating the blend, by melt blending, or by extruding a mixture of the components.

10. The process of claim 8 wherein the thermoplastic block copolymer is selected from the group consisting of styrene-butadiene-styrene block copolymers, hydrogenated styrene-butadiene-styrene block copolymers, styrene-1,3 diene copolymers and graft copolymers and polyolefin.

## Patentansprüche

1. Eine thermoplastische Harz-Zusammensetzung, enthaltend eine Mischung eines harzhaltigen Modifiziermittels mit einem thermoplastischen Blockcopolymeren, dadurch gekennzeichnet, daß sie 50 bis 99 Gewichtsteile eines thermoplastischen Blockcopolymeren umfaßt, enthaltend eine aromatische Blockkomponente und 1 bis 50 Gewichtsteile eines Polyindanharzes mit einem Gewichtsmittel-Molekulargewicht von weniger als 10 000, einem Schmelzpunkt von zumindest 150°C, einer Ungesättigtheit-Funktionalität, die 3 Molprozent (basierend auf Diisopropenylbenzol) nicht übersteigt, und einem Indan-Gehalt von zumindest 90 %.

2. Eine thermoplastische Harz-Zusammensetzung nach Anspruch 1 ferner dadurch gekennzeichnet, daß die Ungesättigtheit-Funktionalität der Polyindanharze 1 Molprozent (auf Basis von Diisopropenylbenzol) nicht übersteigt.

3. Eine thermoplastische Harz-Zusammensetzung nach Anspruch 2, ferner dadurch gekennzeichnet, daß der Indan-Gehalt des Harzes zumindest 95 % beträgt.

4. Eine thermoplastische Harz-Zusammensetzung nach Anspruch 3, ferner dadurch gekennzeichnet, daß der Indan-Gehalt des Harzes 100 % beträgt.

5. Eine thermoplastische Harz-Zusammensetzung nach einem der vorstehenden Ansprüche, ferner dadurch gekennzeichnet, daß der Schmelzpunkt des Indanharzes über 200°C liegt.

6. Eine thermoplastische Harz-Zusammensetzung nach einem der vorstehenden Ansprüche, ferner dadurch gekennzeichnet, daß sie 50 bis 99 Gewichtsprozent eines thermoplastischen Tri-block-(ABA)-copolymeren enthält, das einen elastomeren Block in der Mitte und einen thermoplastischen Block an jedem Ende aufweist.

7. Eine thermoplastische Harz-Zusammensetzung nach Anspruch 6, ferner dadurch gekennzeichnet, daß das ABA-Copolymere ein Styrol-Isopren-Styrol-(SIS)-, ein Styrol-Butadien-Styrol-(SBS)-oder ein Styrol-Ethylen-Butylen-Styrol-Blockcopolymeres ist.

8. Ein Verfahren zur Herstellung einer thermoplastischen Harz-Zusammensetzung, umfassend das Herstellen eines harzhaltigen Modifiziermittels und das Mischen desselben mit einem thermoplastischen Blockcopolymeren, enthaltend eine aromatische Blockkomponente, dadurch gekennzeichnet, daß das harzhaltige Modifiziermittel hergestellt wird durch die Stufen der Bildung einer Mischung, enthaltend Diisopropenylbenzol, ein aromatisches Lösungsmittel, ausgewählt aus der Gruppe bestehend aus Toluol, Xylol, Ethylbenzol, halogenierten aromatischen Lösungsmitteln und halogenierten aliphatischen Lösungsmitteln und einen sauren Tonkatalysator, ausgewählt aus der Gruppe bestehend aus Bronsted-Säuren, Lewis-Basen und sauren Tonkatalysatoren, worin das erwähnte Diisopropenylbenzol 25 bis 50 Gewichtsprozent der erwähnten Mischung enthält; Halten der erwähnten Mischung bei einer Temperatur im Bereich von 80°C bis 180°C für einen Zeitraum von etwa 1 bis 5 Stunden und anschließendes Isolieren eines Polyindan-Polymeren aus der erwähnten Mischung, das einen Indan-Gehalt von 98 % bis 100 % und einen Ungesättigtheitsgehalt von weniger als 3 % aufweist.

9. Ein Verfahren zur Herstellung einer thermoplastischen Harz-Zusammensetzung nach Anspruch 8, ferner dadurch gekennzeichnet, daß das Polyindan-Polymere mit dem thermoplastischen Blockcopolymeren durch Mischen der Komponenten in Lösung und anschließendes Fällen der Mischung, durch Schmelzmischen, oder durch Extrudieren einer Mischung der Komponenten, gemischt wird.

10. Das Verfahren nach Anspruch 8, worin das thermoplastische Blockcopolymere aus der Gruppe bestehend aus Styrol-Butadien-Styrol-Blockcopolymeren, hydrierten Styrol-Butadien-Styrol-Blockcopolymeren, Styrol-1,3-dien-Copolymeren und Pfropfcopolymeren und Polyolefin ausgewählt ist.

## Revendications

1. Composition de résine thermoplastique comprenant un mélange d'un modificateur résineux et d'un copolymère séquencé thermoplastique, caractérisée en ce qu'elle comprend de 50 à 99 parties en poids d'un copolymère séquencé thermoplastique comprenant un composant de séquence aromatique et 1-50 parties en poids d'une résine de polyindane, qui possède un poids moléculaire moyen en poids inférieur à 10.000, un point de fusion d'au moins 150°C, une fonctionnalité d'insaturation n'excédant pas 3% molaires (sur base du diisopropénylbenzène), et une teneur en indane d'au moins 90%.

2. Composition de résine thermoplastique suivant la revendication 1, caractérisée en ce que la fonctionnalité d'insaturation des résines de polyindane n'excède pas 1% molaire (sur base du diisopropénylbenzène).

3. Composition de résine thermoplastique suivant la revendication 2, caractérisée en ce que la teneur en indane de la résine est d'au moins 95%.

4. Composition de résine thermoplastique suivant la revendication 3, caractérisée en ce que la teneur en indane de la résine est de 100%.

5. Composition de résine thermoplastique suivant l'une quelconque des revendications précédentes, caractérisée en ce que le point de fusion de la résine d'indane est supérieur à 200°C.

6. Composition de résine thermoplastique suivant l'une quelconque des revendications précédentes, caractérisée en ce qu'elle comprend de 50 à 99% en poids d'un copolymère triséquencé thermoplastique (ABA) qui possède une séquence élastomérique au centre et une séquence thermoplastique à chaque extrémité.

7. Composition de résine thermoplastique suivant la revendication 6, caractérisée en ce que le copolymère ABA est un copolymère séquencé de styrène-isoprène-styrène (SIS), de styrène-butadiène-styrène (SBS), ou de styrène-éthylène-butylène-styrène.

8. Procédé de fabrication d'une composition de résine thermoplastique, comprenant la préparation d'un modificateur résineux et son mélange à un copolymère séquencé thermoplastique comprenant un composant à séquence aromatique, est caractérisé en ce que l'on prépare le modificateur résineux par les étapes consistant à former un mélange comprenant du diisopropénylbenzène, un solvant aromatique choisi dans le groupe formé par le toluène, le xylène, l'éthylbenzène, des solvants aromatiques halogénés et des solvants aliphatiques halogénés et un catalyseur à base d'argile acide choisi dans le groupe formé par les acides de Bronsted, les bases de Lewis et les catalyseurs à base d'argile acide, où ledit diisopropénylbenzène constitue de 25 à 50% en poids dudit mélange, à maintenir ledit mélange à une température qui varie de 80°C à 180°C, pendant une période qui fluctue de 1 à 5 heures et ensuite à isoler à partir dudit mélange, un polymère de polyindane qui possède une teneur en indane de 98 à 100% et une teneur en insaturation inférieure à 3%.

9. Procédé de préparation d'une composition de résine thermoplastique suivant la revendication 8, caractérisé en ce que l'on mélange le polymère de polyindane au copolymère séquencé thermoplastique, en mélangeant les composants en solution et en précipitant ensuite le mélange, en procédant au mélange à l'état fondu, ou en extrudant un mélange des composants.

10. Procédé suivant la revendication 8, caractérisé en ce que l'on choisit le copolymère séquencé thermoplastique dans le groupe formé par les copolymères séquencés de styrène-butadiène-styrène, les copolymères séquencés de styrène-butadiène-styrène hydrogénés, des polyoléfines, des copolymères greffés et des copolymères de styrène-1,3-diène.
